(19) **Europäisches Patentamt**

**European Patent Office**

**Office européen des brevets**

(11) **EP 1 134 509 B1**

(12) **EUROPEAN PATENT SPECIFICATION**

(45) Date of publication and mention
of the grant of the patent:
**11.08.2004 Bulletin 2004/33**

(51) Int Cl.⁷: **F24F 11/00**

(21) Application number: **01850049.6**

(22) Date of filing: **16.03.2001**

(54) **Arrangement and method for controlling a ventilation system**

Verfahren und Anordnung zur Steuerung eines Belüftungssystems

Procédé et dispositif de commande pour une installation de ventilation

(84) Designated Contracting States:
**DE DK FI FR GB**

(30) Priority: **17.03.2000 SE 0000914**

(43) Date of publication of application:
**19.09.2001 Bulletin 2001/38**

(73) Proprietor: **Stifab Farex AB**
**S-273 35 Tomelilla (SE)**

(72) Inventors:
• **Engdahl, Fredrik**
**211 45 Malmö (SE)**
• **Svensson, Anders**
**280 20 Bjärnum (SE)**

(74) Representative: **Platt, Timothy Nathaniel**
**Albihns Stockholm AB**
**P.O.Box 5581**
**114 85 Stockholm (SE)**

(56) References cited:
**EP-A- 0 721 089        EP-A- 0 819 895**
**US-A- 5 071 065**

• **PATENT ABSTRACTS OF JAPAN vol. 1995, no. 06, 31 July 1995 (1995-07-31) -& JP 07 063404 A (MITSUBISHI ELECTRIC CORP), 10 March 1995 (1995-03-10)**
• **PATENT ABSTRACTS OF JAPAN vol. 011, no. 385 (M-651), 16 December 1987 (1987-12-16) & JP 62 153649 A (MITSUBISHI ELECTRIC CORP), 8 July 1987 (1987-07-08)**

**Description**

The invention relates to an arrangement and a method for controlling a ventilation system of the type indicated in the precharacterizing clause of claims 1 and 20, respectively.

The requirements the personnel active in the premises have of a good indoor climate constitute one starting point for the design of a modern ventilation system. By convention, the term indoor climate includes the thermal climate, the air quality and the acoustic climate. With the conventional classification of ventilation systems, the selection of a suitable technical solution is an important step in planning. The choice of system should be made with regard to the following main factors:

Suitability, that is to say the capability of the technical solution to meet the quality requirements set.
Operational reliability, that is to say the capability of the technical solution to function satisfactorily in the long term.
Economy of resources, that is to say the energy efficiency, cost-effectiveness etc. of the technical solution.

In selecting a technical solution, simplicity, comprehensibility and a capacity to tolerate deviations in operating conditions should be sought. Technical solutions which do not allow the use of the premises to be changed or windows to be opened or which are otherwise sensitive to external disruptive influences are to be avoided. Stifab Farex AB is introducing the concept of "forgiving ventilation systems" which means systems which are resistant to disruptive influences.

There are a number of different ventilation engineering solutions which can meet the requirements for a correct air flow to all parts of the system. The main categories spoken of are:

CAV (Constant Air Volume) systems, with constant air flows. The simplest and in general most inexpensive alternative.
VAV (Variable Air Volume) systems, with a variable air flow which is as a rule controlled via a room thermostat. The blower is provided with some form of flow regulation.
DCV (Demand Controlled Ventilation) systems, with a demand-controlled air flow which is as a rule controlled via an air-quality or presence sensor. All the system solutions can of course be made with either mixing or thermally controlled ventilation. Both CAV and DCV systems can be combined with alternative heating and cooling equipment for controlling ambient temperature.

CAV systems are used where both heat generation and impurity production are low and reasonably constant. The supply air flow is determined in the main by air quality requirements. If the hygienic air flow is not sufficient to carry off the heat generated, products for waterborne cold can be added.

CAV systems are in most cases constructed according to the branch principle with adjustment registers in each branch. The pressure drops across the devices are selected so that, together with the pressure drops across the adjustment registers, they provide the correct flow distribution.

One disadvantage of this principle is that the system can easily become unbalanced on account of disruptions caused by thermal rising forces, changes in register positions etc.
Another disadvantage is the relatively high pressure drops across registers and devices for ensuring that the flow variations will not be too great. This can in turn result in noise problems becoming annoying at the same time as the energy consumption is unnecessarily high. A reduction of the blower speed in order to reduce the energy consumption during certain periods results in it not being possible to maintain the flow distribution due to the fact that the pressure drops across devices and registers are reduced.

VAV/DCV systems are used when the heat load varies. Heating is suitably effected by radiators and, if applicable, excess heat is carried off via waterborne system products such as, for example, cooling baffles or cooling ceiling arrangements.

What distinguishes VAV/DCV systems from CAV systems is inter alia that there is pressure regulation in the main ducts for supply air and exhaust air. This is necessary from the point of view of both energy and noise. Another difference is that, in direct association with the supply air devices, there are regulating units which control the air flows through the devices. A fundamental problem with this is that, when the flows are reduced, the pressure drops across the devices increase, which can have serious consequences for functioning. Increased pressure drops generally produce higher noise levels. The pressures in the main ducts likewise have to guarantee the whole time that the worst located branch duct receives a sufficient supply of air. If the flow distribution in the system allows a temporary lower pressure, the desired value set has to be maintained. This of course impacts negatively on the operating costs.

A regulating arrangement for adjusting a register in a ventilation duct for the purpose of maintaining an essentially constant pressure at a selected point in the ventilation duct is known from our earlier SE-B-458 802 and corresponding EP-A-0 285 588. A method and an arrangement for keeping the pressure constant in a ventilation duct by means of a flow-regulating arrangement are also known from our earlier EP-A-0 433 251. a method of said kind is known by EP-A-0 721 089.

However, system solutions produced thus far have not allowed simple adjustment either. The consequence was imbalance in systems with subsequent high pressure drops in certain parts and thus altogether too high noise levels. In other parts of the system, the air flows were too low, with impaired air quality as a consequence. In the planning of ventilation units, moreover, the priorities are often low cost and high capacity, which results in small units and high noise levels and associated problems. Likewise, imbalance often arises between supply air and exhaust air in the ventilation unit. This causes leakage flows of exhaust air into the supply air system, with poor air quality as a consequence. Another factor is a lack of consideration for the wishes of the users. As a user, it is desirable to be able to influence the surrounding climate.

An important aspect is to bring down energy consumption. In modern buildings, roughly 40% of all the energy produced is used exclusively to provide the necessary heat or cold. It is therefore necessary to create system solutions which can minimize energy consumption without foregoing comfort.

There are therefore a number of reasons to seek new solutions for constructing ventilation systems in which the pressures in the branch ducts are kept constant. In this way, the preconditions for a flexible installation are created because the flows in the devices can be varied in a simple manner without disrupting the balance in the system. It is also possible to produce a quiet installation because the pressure drops are automatically limited. It is likewise possible to bring about an energy-efficient installation because no extra pressure drops are required in order to make it possible to guarantee the air flows even in the worst located branch duct.

The object of the invention is therefore to produce an improved ventilation system of the type indicated, which is easier to handle, and cheaper and simpler than before, and affords a reduction in the energy consumption and a limitation of the noise generation of the system.

This is possible with an arrangement for a ventilation system according to the characterizing features in claim 1. A corresponding method for controlling a ventilation system is indicated by the characterizing features in claim 20. Further features, developments and improvements of the invention emerge from the dependent claims and are described below as exemplary embodiments with reference to the appended drawing, in which

Fig. 1 is a diagrammatic view of a ventilation system according to the invention,

Fig. 2 is a diagram which shows the relationship between energy consumption and flow of the ventilation system according to Fig. 1 in comparison with a conventional system,

Fig. 3 is a diagram which shows that the more the register closes, the lower the noise generation is in the case of pressure-controlled flow regulation,

Fig. 4 is a diagrammatic view which shows an example of demand-controlled ventilation of a delimited space by means of active supply air devices and room sensors,

Fig. 5 is a diagrammatic cross section of an active device according to Fig. 4 on enlarged scale with a movably mounted motor, and

Fig. 6 is a diagrammatic cross section of an active device according to Fig. 4 on enlarged scale with a motor mounted in a fixed manner.

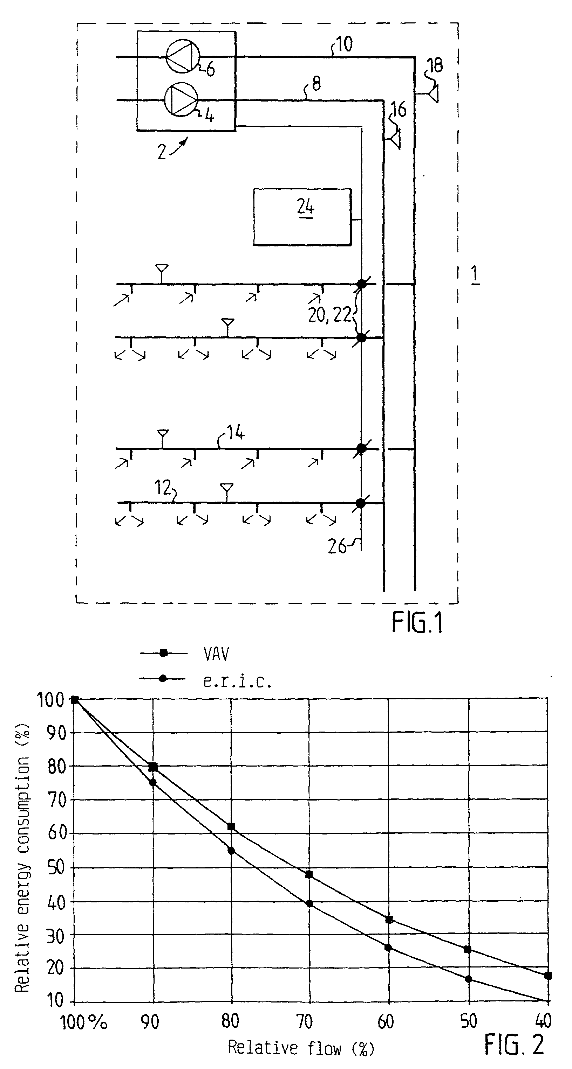

Fig. 1 shows a ventilation system 1 according to the invention, which comprises an air treatment unit 2 with a supply air blower 4 and an exhaust air blower 6 which are each connected to main ducts for supply air 8 and, respectively, exhaust air 10. Branched off from the main ducts are supply air branch ducts 12 and, respectively, exhaust air branch ducts 14, two of each type being shown in the figure. In each main duct, between the respective blower 4, 6 and the first branch duct branched off from the main duct, a first pressure sensor 16, 18 is arranged, for controlling the blower speed depending on a dimensioning parameter $P_{1tot}$. Directly after branching off from the main duct, each branch duct 12, 14 is provided with its own regulator 20, comprising a register 22 with an actuating device, for keeping the pressure constant in the respective branch duct between upper ($P_{max}$) and lower ($P_{min}$) limit values depending on the speed of the blower.

Each regulator is connected to a system manager 24 which is arranged so as to influence the speed n of the blower depending on the degree of opening $\alpha_1$, $\alpha_2$ - $\alpha_n$ of the registers in such a manner that the blower can be regulated between a predetermined maximum speed $n_{max}$ for a maximum air flow $q_{max}$, when all the registers are open to their maximum extent $\alpha_{max}$, and a minimum speed $n_{min}$ for a minimum air flow $q_{min}$, when all the registers are closed to their maximum extent $\alpha_{min}$, in order to maintain predetermined pressures $P_1$, $P_2$ - $P_n$ in the respective branch ducts. The system manager 24 has an evaluation circuit (not shown) for mutual comparison of the current degree of opening $\alpha_1$, $\alpha_2$ - $\alpha_n$ of the registers. The evaluation circuit is arranged so as, when all the registers are to some extent closed and the most open register has reached a predetermined degree of opening $\alpha_{pred}$, to supply signals to the blower, via LonTalk 26, to reduce the speed until the register has assumed its maximum degree of opening $\alpha_{max}$.

A pressure regulator forming part of the ventilation system according to the invention includes a microprocessor with a built-in communication protocol for LonTalk and is completely remote-controllable and remote-configurable.

A system for energy optimization is based on Stifab Farex pressure regulation in branch duct systems where the pressure is kept constant at the pressure sensor points at, for example, roughly 35 Pa. The regulating units at the start of the branches handle the regulation. The system configuration is carried out by connecting a portable PC up to the Lon network. By using a system manager as the heart of the system, a stationary PC which is continuously connected is not required. The system also makes it possible for even very small installations to be energy-optimized at a very reasonable cost. Energy-optimization is effected by LonTalk communication between the regulating units for constant branch pressure, the system manager and the air treatment unit. Optimization is brought about by the system manager monitoring the register positions and minimizing the pressure set-up of the unit so that at least one of the registers on the supply air side and, respectively, the exhaust air side is always virtually completely open. The system manager and the unit can also communicate with other central systems in the building so that pumps and supply line temperatures in the heating/cooling system can be adjusted for minimum energy consumption. In this way, energy is saved and future noise disturbance is eliminated by virtue of the fact that the unit always operates at as low a speed as possible.

Fig. 2 is a diagram which shows the relationship between energy consumption and flow of the ventilation system according to Fig. 1 in comparison with a conventional system. According to the invention, it is therefore possible to bring about an energy-efficient installation because no extra pressure drops are required in order to make it possible to maintain sufficiently large air flows even in the worst located branch duct.

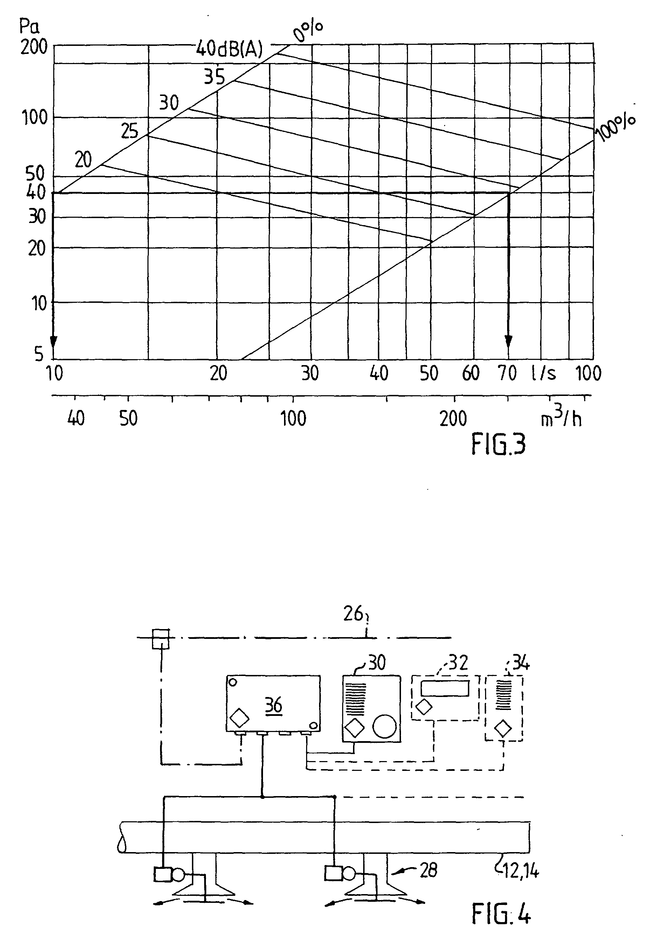

Fig. 3 is a diagram which shows that the more the register in a branch duct closes, the lower the noise generation is in the case of pressure-controlled flow regulation. As a result, it is possible, by means of the invention, to produce a relatively quiet installation because the pressure drops are automatically limited.

Flow-control by device

The technical solutions normally used in designing ventilation systems do not allow variation of the air flows in the supply air and exhaust air devices. Only in cases in which VAV/DCV systems are selected can the air flow, by automatic means, be controlled via the room temperature, the $CO_2$ concentration or presence sensors. This of course results in the flexibility of the system being limited. It is therefore not possible to change the planned air flows without resetting the entire system.

The flow control normally carried out in VAV/DCV systems does not take place in the device itself but via registers directly in front of the devices. A disadvantage of this is that the speed of the air when it leaves the ventilation device will vary proportionally to the air flow. This means that ceiling devices with small air flows and inadequately temperature-controlled supply air will result in the ventilation air leaving the ceiling and descending directly into the occupied zone. Problems which can then arise are high air speeds with draught problems as a consequence. A solution is low-speed devices at floor level, which are insensitive to this type of disruptive influence.

If warm air is supplied through a ceiling device, this also creates flow regulation problems. If the flow is reduced, the impetus out of the device is also reduced. This results in shorter projection distances and a great risk of stagnation zones in the room.

If the concept of **"forgiving ventilation systems"** is applied, one is immediately on the track of the solution.

By keeping the pressure constant in the branch ducts, flexibility is afforded with regard to changing the flow in the devices. The devices can be changed individually without this having other negative effects on the balance in the system or the setting of the installation. In contrast to VAV boxes, no flow measurement is necessary in the device, which results in reduced maintenance and a stable system. The flow is determined on the basis of the opening (0-100%) of the device and the underlying constant static pressure. Keeping the pressure constant is therefore justified even if the installation is planned to function as a CAV system. The installation compensates automatically for the "disruptive influences" which always occur in systems. Keeping the pressure constant therefore allows devices with constant and, respectively, varying flows to be combined on one and the same branch.

A precondition for a good distribution pattern in a room, when temperature-controlled ventilation air is supplied, and when the air flow varies within a great flow range, is that the speed of the supply air when it leaves the device is constant. This can be achieved simply by virtue of the flow regulation taking place in the outlet of the device instead of the inlet of the device. A precondition for this is that the pressure is kept constant in the branch ducts. The "disruptive influences" which occur in the form of varying air flow are compensated automatically by keeping the pressure constant in the branch ducts. Products which are particularly suitable for use for constant outlet speed are circular or square single-cone distributors. Nozzle devices usually have good properties in the case of varying air flow. The lowest permissible air flow in the case of an undertemperature of roughly 5°C is usually limited, however, to roughly 30% of the maximum air flow. If it is desired to reduce the air flow further, devices with a constant outlet speed are required.

Fig. 4 shows an example of demand-controlled ventilation of a delimited space by means of active device valves 28 which will be described in greater detail below and communicate with room sensors 30, 32, 34 via a device-regulating arrangement 36 which can in turn communicate via LonTalk 26 with, for example, the system manager 24. It is normal for there to be ten device valves on the same branch duct 12, 14. The room sensors can comprise a thermostat 30, a presence sensor, for example an IR indicator 32, and a $CO_2$ sensor 34. Alternatively, a switch (not shown) for room illumination can also be connected to the device-regulating arrangement 36, in order to indicate the presence of a person or persons.

According to a preferred embodiment, the device valves are designed as a cone distributor 38, by means of which the air flow can be regulated by the outlet area A being controlled by means of a valve means in the form of a movable disc or cone 40. The control is carried out by means of an electric motor 42 which is mounted separately from the outflow opening 44 of the cone distributor in such a manner that the motor is essentially enclosed in the cone 40. The rotary movement of the motor is converted into a linear movement by engagement means in the form of a threaded spindle or a rack 46. Advantageously, the engagement means can comprise a threaded screw 46 which interacts with a nut (not shown).

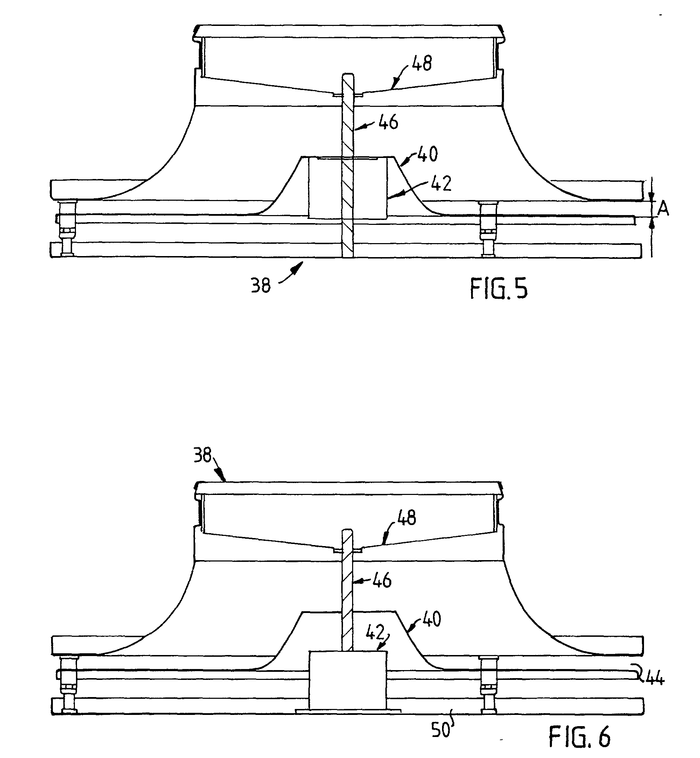

The motor 42 can be firmly anchored on the cone 40 and mounted inside the same, as can be seen from Fig. 5, and the screw 46 is then firmly mounted in the valve by means of a fastening arrangement 48. The nut (not shown) is then anchored on the motor spindle (not shown). Alternatively, as can be seen from Fig. 6, the motor can instead be firmly anchored on the front portion 50 of the valve. The nut is then fastened on the cone 40 and the screw 46 is connected to the motor spindle and mounted in the fastening arrangement 48.

Device theory

The air speeds in air jets from different types of device can usually be calculated according to the following formula:

$$\frac{v_x}{v_0} = C_c * \frac{\sqrt{A_0}}{X}$$

where

$v_x$ = the speed at the distance x from the opening
$v_0$ = the speed in the stipulated cross section $A_0$
$C_c$ = the factor characteristic of the supply air device
$A_0$ = the area in the stipulated cross section (the effective area)
x = the distance from the opening where the speed $v_x$ occurs.
If $v_x$ in the above equation is set at 0.2 m/s, x = $L_{0.2}$ that is to say the projection distance at 0.2 m/s.

We obtain:

$$L_{0,2} = C_c * \frac{v_0 * \sqrt{A_0}}{0,2}$$

The projection distance is therefore proportional to the outlet speed and the root of the outlet area. Given that it is desirable to maintain a uniform distribution pattern in the room, the outlet speed must be reasonably constant when the air flow is varied. A reduced outlet speed means that it is easier for the air to leave the ceiling and descend into the occupied zone at an increased speed as a consequence. A distinction is made between two types of supply air device:

Passive devices which have the same setting irrespective of the air flow.

Active devices which have flow regulation in the outlet of the device, which results in constant outlet speed irrespective of the air flow. If, with passive devices, the air flow is reduced from 100% to 50%, the projection distance is also reduced by 50% if no change is made on the device. The reduction in the projection distance will not be a problem when use is made of nozzle devices with rotational adjustment. For other types of device, problems may arise with the distribution patterns. If the flow is reduced in the same way with an active supply air device, that is to say a device in which the outlet speed is kept constant by virtue of the area being changed, the projection distance is only reduced to 70% of the original. The reduction does not constitute any problem at all for any device variant because the air, thanks to the high outlet speed, does not lose contact with the ceiling. If the air flow is reduced to 30% with a conventional device, the projection distance will be reduced to 30% of the original. This inevitably means that the air will leave the ceiling and cause problems in the occupied zone. An active device has a projection distance which is roughly 55% of the original. This leads to the risk of draught problems being reduced due to the fact that the air speeds will be reduced. The air flows are also lower of course. The flow pattern in the room is similar to the flow pattern in the case of the larger air flow but with a smaller depth of penetration. The major difference between passive and active devices is therefore that, with passive devices, the draught risk increases when the air flow is reduced. With active devices, the draught risk is reduced when the air flow is reduced. The disadvantage of passive devices, in connection with flow-regulated installations, is one of the reasons why there has not been any positive development of VAV/DCV systems.

**PLANNING**

**Unit**

Depending on the type of activity, control principles and geographical location, a simultaneity factor is assumed (usually between 70-90%). Addition of the maximum flows multiplied by the simultaneity factor gives the upper flow limit of the unit. Any future changes in capacity (flexibility) should also be taken into consideration. Addition of the minimum flows gives the lower flow limit of the unit. Check that the unit can operate in the flow range concerned. The unit is to be pressure-controlled with pressure sensors positioned before the first branch or alternatively in a distribution box if one is used instead of a main duct.

**Main ducts**

Main ducts are dimensioned on the basis of the maximum flow multiplied by the simultaneity factor. Dimensioning is suitably carried out using one of the established methods, constant speed or constant pressure drop.

**Branch ducts (ducts before bifurcation to device) - supply air**

The branch ducts are dimensioned on the basis of constant speed. The flow received in the devices depends on the speed for which the branch is dimensioned. Noise must also be taken into consideration of course. A branch with a maximum often bifurcations and constant static pressure of 35 Pa has the following flow variations as a function of dimensioning speed (see table below). Variation between devices is at maximum flow to all the devices and the difference between best and, respectively, worst located device in terms of pressure drop in relation to the desired value (same desired value in all the devices). Individual variation is the flow difference in a device at maximum flow depending on flow in the other bifurcations. In the calculations below, the distance between bifurcations is 3 m. Increased distance results in greater deviations; dimension then for a lower speed.

| Dimensioning speed | Variation between devices and desired value on whole branch | Individual variation |
|---|---|---|
| 5 m/s | +/- 10% | +/- 5% |
| 4 m/s | +/- 8% | +/- 4% |
| 3 m/s | +/- 4% | +/- 2% |
| 5 m/s and constant diameter | +/- 4% | +/- 2.5% |
| 8 m/s and constant diameter | +/- 4.4% | +/- 3.6% |

An alternative to dimensioning using constant speed (the speed above is the speed before the first bifurcation) is constant diameter. This increases the flexibility and allows scope for future modifications and small deviations. If there is a basis for assuming a simultaneity factor on the branch, this of course affords a possibility for reducing the dimensions or alternatively dimensioning for 100%, which results in less noise and increased flexibility for future changes.

In the event that minor variations are required, or one or more devices are worse located in terms of pressure drop than the others on the branch, see the section on "checking device and branch duct".

**Dimensioning devices and static pressure in branch**

The pressure sensor on the supply air branch is positioned in the middle of the branch. The pressure sensor on the exhaust air branch is positioned between the last and the next last device.

Devices are selected in a customary manner on the basis of a diagram. On the basis of desired flow and fully open register, the total pressure drop across the device is read off. This pressure will also be the static pressure kept constant in the branch duct.

**Dimensioning bifurcations**

Bifurcations are dimensioned for a maximum of 3 m/s.

**Balancing supply air and exhaust air**

Balancing takes place in the room by selecting the correct exhaust air device and static pressure in the exhaust air branch. Adapt the static pressure for any displacement between supply air and exhaust air. This can also be carried out in the room regulator if it is not desired to obtain the same positive pressure or negative pressure in rooms.

An alternative to this is transferred air when the balancing has to take place on the basis of total flow from the zone. This is achieved by keeping the pressure constant and measuring the flow (product: KZMa) on the supply air branch. This regulator measures the supply air flow and sends it to a flow slave (product: KSAa) located on the exhaust air branch. The flow can be sent with a displacement either as a percentage or a fixed flow in l/s.

**Setting and putting into service with system manager**

Indicate a suitable starting pressure for the supply air blower and the exhaust air blower (factory-set values are 30%) by means of the operating panel (KOPa). Input data are given as percentages, which are percentages of the measuring range of the pressure sensor. Start the unit. The unit builds up the pressure which has been indicated and then waits 15 minutes (factory-set, can be changed by means of KOPa) for the system to stabilize itself. After this time, the system manager checks that no register is completely open (that all branches have the flow which is required). If a register is completely open, the system manager increases the desired pressure value for the blower and this procedure continues until the open register begins to close. The system manager then investigates whether the most open register is less than 60% open (factory setting) and, if so, a lower desired value is assigned to the blower. The same procedure takes place for both supply air and exhaust air.

**Setting and putting into service without system manager**

The supply air and exhaust air pressure which the blower is to keep constant must be found. This is done by forcing all the rooms to maximum flow (or alternatively simultaneity factor [*] maximum flows). The forcing is carried out by, for example, setting a low desired cooling value in all the rooms. The pressure is correct when the most open branch register is 80-100% open.

**Checking device and branch duct**

Check that the branch has the planned static pressure (by means of KOPa or manually). If the pressure is too low, check whether the register is completely open. If the register is completely open, the pressure after the blower must be increased. If the register is not completely open, check the desired value and the actual value in the constant-pressure regulator by means of the operating panel KOPa. If the desired value corresponds, but the actual value does not, check the pressure sensor unit (KSPa).

Force the device in the room by setting (by means of the operating panel) parameter 18 (nviManOverride) from "off" to "position" and 100%. Wait until the pressure in the branch has returned to the desired value.
Measure the static pressure in the device box.
Go to position 48 (nciCalcFlow) on the operating panel (KOPa) and indicate the planned/desired flow in 1/s.
Go to position 49 (nciCalcPress) on the operating panel (KOPa) and indicate the pressure measured in the box.
Go to position 50 (nvoCalcResult) on the operating panel (KOPa) and read off the opening/position (0-100%) the device is to have for the flow to be obtained. If an invalid value is obtained, either the measured pressure is too low or the device cannot take the pressure drop.
Reset parameter 18 (nviManOverride) to "off".

**Claims**

**1.** Arrangement for a room ventilation system comprising an air treatment unit (2) with a supply air blower (4) which is connected to a supply air duct (8) with a number of branch ducts (12), provided with supply air openings and a first pressure sensor (16) arranged before the first branch duct (12), for controlling the speed (n) of the blower (4) in dependency of a predetermined dimensioning parameter ($P_{tot}$), which branch ducts (12) are each provided with their own additional pressure sensor (16) connected to a regulator (20), for keeping the pressure constant in the respective branch duct (12) between upper ($P_{max}$) and lower ($P_{min}$) limit values depending on the speed (n) of the blower (4), which regulator (20) comprises a register (22) with an actuating device, **characterized in that** each regulator (20) is connected to a system manager (24), which in turn is communicative (26) with a regulating unit (36) for regulating the flow through each supply air opening by means of a supply air device (28) in dependency of room sensors (30, 32, 34) connected to said regulating unit (36), whereby the the speed (n) of the blower (4), depending on the degree of opening ($\alpha_1$, $\alpha_2$ - $\alpha_n$) of the registers (22), is controllable between a predetermined maximum speed ($n_{max}$) for a maximum air flow ($q_{max}$), when all the registers (22) and supply air devices (28) are open to their maximum extent ($\alpha_{max}$), and a minimum speed ($n_{min}$) for a minimum air flow ($q_{min}$), when all the registers (22) and supply air devices (28) are closed to their maximum extent ($\alpha_{min}$), in order to maintain predetermined branch duct pressures ($P_1$, $P_2$ - $P_n$), and **in that** the system manager has an evaluation circuit (24), for mutual comparison of the current degree of opening ($\alpha_1$, $\alpha_2$ - $\alpha_n$) of the registers (22), which evaluation circuit (24) is arranged so as, when all the registers (22) are to some extent closed and the most open register (22) has reached a predetermined degree of opening ($\alpha_{pred}$), to supply signals (26) to the blower (4) to reduce the speed (n) until said register (22) has assumed the maximum degree of opening ($\alpha_{max}$).

2. Ventilation system according to claim 1, **characterized in that** the air treatment unit (2) comprises an exhaust air blower (6) which, in a corresponding manner to the supply air blower (4), is connected to an exhaust air duct (10) with a number of exhaust air branch ducts ( 14) and a second pressure sensor (18), arranged before the first branch duct, for controlling the speed (n) of the exhaust air blower (6) depending on a second predetermined dimensioning parameter ($P_{2tot}$), and **in that** each exhaust air branch duct (14) comprises an exhaust air register (22) which is provided with an actuating device and has an opening angle ($\alpha_1$, $\alpha_2$-$\alpha_n$), which can be regulated by means of control signals supplied from the regulator (20) of the corresponding supply air branch duct (12), for setting a pressure in the exhaust air branch duct (14) which is directly proportional to the current actual value of the static pressure in the supply air branch duct (12).

3. Ventilation system according to claim 1, **characterized in that** the air treatment unit (2) comprises an exhaust air blower (6) which, in a corresponding manner to the supply air blower (4), is connected to an exhaust air duct (10) with a number of exhaust air branch ducts (14) and a second pressure sensor (18), arranged before the first branch duct, for controlling the speed (n) of the exhaust air blower (6) depending on a second predetermined dimensioning parameter ($P_{2tot}$), and **in that** each exhaust air branch duct (14) comprises a further second pressure sensor (18) which is located at an indicated point of the latter and is connected to a second regulator (20) for keeping the pressure constant in the respective exhaust air branch duct (14) between upper ($P_{max}$) and lower ($P_{min}$) limit values, likewise depending on the speed (n) of the blower (6), for the pressure in the respective exhaust air branch duct (14).

4. Ventilation system according to claim 3, **characterized in that** the second regulator (20) is arranged so as to adjust the actual value for the flow at the indicated point of the exhaust air branch duct (14) according to a desired value for the supply air branch duct (12).

5. Ventilation system according to claim 4, **characterized in that** the desired value for the exhaust air branch duct (14) is the same as the value indicated by the first pressure sensor (16).

6. Ventilation system according to any one of the preceding claims, **characterized in that** the branch ducts (14) of the exhaust air duct (10) each have an individual number of exhaust air openings.

7. Ventilation system according to claim 6, **characterized in that** each exhaust air opening is provided with an exhaust air device (28) for setting a predetermined exhaust air flow.

8. Ventilation system according to claim 7, **characterized in that** the exhaust air device is an active device (28).

9. Ventilation system according to anyone of the preceding claims, **characterized in that** the sensors arranged in each room comprise temperature sensors (30).

10. Ventilation system according to claim 9, **characterized in that** the sensors arranged in each room comprise sensors (34) which indicate a $CO_2$ concentration value.

**11.** Ventilation system according to claims 9 or 10, **characterized in that** the sensors arranged in each room comprise presence sensors (32) which include an IR indicator.

**12.** Ventilation system according to any one of the preceding claims, **characterized in that** the air treatment unit (2) includes a heat exchanger for heating or, as the case may be, cooling supply air.

**13.** Ventilation system according to any one of the preceding claims, **characterized in that** each active device (28) is designed as a cone distributor (38) which has a valve means (40) which is located in the outlet of the device and is operable by means of a drive arrangement (42).

**14.** Ventilation system according to claim 13, **characterized in that** the drive arrangement is an electric motor (42) separate from the outflow opening (44) of the device.

**15.** Ventilation system according to claim 14, **characterized in that** the electric motor (42) is enclosed in the valve means (40).

**16.** Ventilation system according to claim 15, **characterized in that** the valve means (40) is a shut-off cone or a valve disc.

**17.** Ventilation system according to claim 15 or 16, **characterized in that** the valve means (40) is operated by screw means (46, 48) acted on by the motor (42).

**18.** Ventilation system according to claim 17, **characterized in that** the screw means consists of a threaded spindle or nut (46).

**19.** Ventilation system according to any one of the preceding claims, **characterized in that** the predetermined degree of opening lies in a range of 70-90% of the maximum degree of opening.

**20.** Method for controlling a ventilation system according to any one of claims 1-20 and comprising an air treatment unit (2) with a supply air blower (4) which is connected to a supply air duct (8) with a number of branch ducts (12) and a first pressure sensor (16), arranged before the first branch duct, for controlling the speed of the blower according to a predetermined dimensioning parameter ($P_{tot}$), which branch ducts (12) are each provided with their own additional pressure sensor (16) connected to a regulator (20) for keeping the pressure constant in the respective branch duct (12) between upper ($P_{max}$) and lower ($P_{min}$) limit values depending on the speed (n) of the blower (4), which regulator (20) comprises a register (22) with an actuating device, **characterized by** the following steps:

a) the actuating device of each branch duct register (22; $S_1$, $S_2$, $S_n$) indicates the degree of opening ($\alpha_1$, $\alpha_2$, $\alpha\alpha_n$) of the register and supplies the value of the same to a system manager (24; M) which is arranged in the system and by means of
b) an evaluation circuit (24; U) compares the current degrees of opening of the registers with one another in order to establish which of the registers (22; $S_1$, $S_2$, $S_n$) has the greatest current degree of opening ($\alpha_{dim}$),
c) which evaluation circuit (24; U), when all the registers are to some extent closed and the greatest current degree of opening ($\alpha_{dim}$) is greater than a predetermined degree of opening ($\alpha_{pred}$), generates signals (26) to the blower (4) to reduce the speed until the register assumes its maximum degree of opening ($\alpha_{max}$).

**Patentansprüche**

**1.** Anordnung für ein Raumbelüftungssystem mit einer Luftbehandlungseinheit (2) mit einem Zuluftgebläse (4), das mit einem Zuluftkanal (8) mit einer Anzahl von Seitenkanälen (12) verbunden ist, mit Zuluftöffnungen und einem vor dem ersten Seitenkanal (12) angeordneten ersten Drucksensor (16), um die Drehzahl (n) des Gebläses (4) in Abhängigkeit von einem vorbestimmten Dimensionierungsparameter ($P_{tot}$) zu steuern, wobei die Seitenkanäle (12) jeweils mit ihrem eigenen zusätzlichen Drucksensor (16) versehen sind, der mit einem Regler (20) verbunden ist, um den Druck in dem jeweiligen Seitenkanal (12) in Abhängigkeit von der Drehzahl (n) des Gebläses (4) zwischen einem oberen Grenzwert ($P_{max}$) und einem unteren Grenzwert ($P_{min}$) konstant zu halten, wobei der Regler (20) eine Lüftungsklappe (22) mit einer Betätigungsvorrichtung umfasst, **dadurch gekennzeichnet, dass** jeder Regler (20) mit einem System-Manager (24) verbunden ist, der wiederum mit einer Regulierungseinheit (36) in Verbindung steht (26), um den Strom durch jede Zuluftöffnung mittels einer Zuluftvorrichtung (28) in Abhängigkeit von mit der Regulierungseinheit (36) verbundenen Raumsensoren (30, 32, 34) zu steuern, wodurch die Drehzahl (n) des Gebläses (4) in Abhängigkeit vom Öffnungsgrad ($\alpha_1$, $\alpha_2$ - $\alpha_n$) der Lüftungsklappen (22) gesteuert werden kann zwischen einer vorbestimmten maximalen Drehzahl ($n_{max}$) für einen maximalen Luftstrom ($q_{max}$), wenn alle Lüftungsklappen (22) und die Zuluftvorrichtungen (28) maximal geöffnet sind ($\alpha_{max}$), und einer minimalen Drehzahl ($n_{min}$) für einen minimalen Luftstrom ($q_{min}$), wenn alle Lüftungsklappen (22) und die Zuluftvorrichtungen (28) maximal geschlossen sind ($\alpha_{min}$), um vorbestimmte Seitenkanaldrücke ($P_1$, $P_2$ - $P_n$) aufrechtzuerhalten, und dass der System Manager eine Auswerteschaltung (24) aufweist, um den aktuellen Öffnungsgrad ($\alpha_1$, $\alpha_2$ - $\alpha_n$) der Lüftungsklappen (22) miteinander zu vergleichen, wobei die Auswerteschaltung (24) so ausgelegt ist, dass dann, wenn alle Lüftungsklappen (22) bis zu einem gewissen Grad geschlossen sind und die am weitesten geöffnete Lüftungsklappe (22) einen vorbestimmten Öffnungsgrad ($\alpha_{pred}$) erreicht hat, dem Gebläse (4) zugeführte Signale (26) die Drehzahl (n) reduzieren, bis die Lüftungsklappe (22) den maximalen Öffnungsgrad ($\alpha_{max}$) angenommen hat.

2. Belüftungssystem nach Anspruch 1, **dadurch gekennzeichnet, dass** die Luftbehandlungseinheit (2) ein Abluftgebläse (6) umfasst, das entsprechend dem Zuluftgebläse (4) mit einem Abluftkanal (10) mit einer Anzahl von Abluftseitenkanälen (14) und einem vor dem ersten Seitenkanal angeordneten zweiten Drucksensor (18) verbunden ist, um die Drehzahl (n) des Abluftgebläses (6) in Abhängigkeit von einem zweiten vorbestimmten Dimensionierungsparameter ($P_{2tot}$) zu steuern, und dass jeder Abluftseitenkanal (14) eine Abluftklappe (22) umfasst, die mit einer Betätigungsvorrichtung versehen ist und einen Öffnungswinkel ($\alpha_1$, $\alpha_2$ - $\alpha_n$) aufweist, der mit Hilfe von Steuersignalen reguliert werden kann, die von dem Regler (20) des entsprechenden Zuluftseitenkanals (12) zugeführt werden, um einen Druck in dem Abluftseitenkanal (14) einzustellen, der direkt proportional ist zu dem aktuellen Istwert des statischen Druckes in dem Zuluftseitenkanal (12).

3. Belüftungssystem nach Anspruch 1, **dadurch gekennzeichnet, dass** die Luftbehandlungseinheit (2) ein Abluftgebläse (6) umfasst, das entsprechend dem Zuluftgebläse (4) mit einem Abluftkanal (10) mit einer Anzahl von Abluftseitenkanälen (14) und einem vor dem ersten Seitenkanal angeordneten zweiten Drucksensor (18) verbunden ist, um die Drehzahl (n) des Abluftgebläses (6) in Abhängigkeit von einem zweiten vorbestimmen Dimensionierungsparameter ($P_{2tot}$) zu steuern, und dass jeder Abluftseitenkanal (14) einen weiteren zweiten Drucksensor (18) umfasst, der sich an einer angegebenen Stelle des letzteren befindet und mit einem zweiten Regler (20) verbunden ist, um den Druck in dem jeweiligen Abluftseitenkanal (14) zwischen einem oberen Grenzwert ($P_{max}$) und einem unteren Grenzwert ($P_{min}$) für den Druck in dem jeweiligen Abluftseitenkanal (14), ebenfalls in Abhängigkeit von der Drehzahl (n) des Gebläses (6), konstant zu halten.

4. Belüftungssystem nach Anspruch 3, **dadurch gekennzeichnet, dass** der zweite Regler (20) so ausgelegt ist, dass er den Istwert für die Strömung an der angegebenen Stelle des Abluftseitenkanals (14) nach einem gewünschten Wert für den Zuluftseitenkanal (12) einstellt.

5. Belüftungssystem nach Anspruch 4, **dadurch gekennzeichnet, dass** der gewünschte Wert für den Abluftseitenkanal (14) derselbe ist wie der von dem ersten Drucksensor (16) angezeigte Wert.

6. Belüftungssystem nach einem der vorhergehenden Ansprüche, **dadurch gekennzeichnet, dass** die Seitenkanäle (14) des Abluftkanals (10) jeweils eine individuelle Anzahl von Abluftöffnungen haben.

7. Belüftungssystem nach Anspruch 6, **dadurch gekennzeichnet, dass** jede Abluftöffnung mit einer Abluftvorrichtung (28) zum Einstellen eines vorbestimmten Abluftdurchsatzes versehen ist.

8. Belüftungssystem nach Anspruch 7, **dadurch gekennzeichnet, dass** die Abluftvorrichtung eine aktive Vorrichtung (28) ist.

9. Belüftungssystem nach einem der vorhergehenden Ansprüche, **dadurch gekennzeichnet, dass** die in jedem Raum angeordneten Sensoren Temperatursensoren (30) umfassen.

10. Belüftungssystem nach Anspruch 9, **dadurch gekennzeichnet, dass** die in jedem Raum angeordneten Sensoren Sensoren (34) umfassen, die einen Wert für die $CO_2$-Konzentration anzeigen.

11. Belüftungssystem nach Anspruch 9 oder 10, **dadurch gekennzeichnet, dass** die in jedem Raum angeordneten Sensoren Anwesenheitssensoren (32) umfassen, die einen IR-Indikator enthalten.

**12.** Belüftungssystem nach einem der vorhergehenden Ansprüche, **dadurch gekennzeichnet, dass** die Luftbehandlungseinheit (2) einen Wärmetauscher zum Erwärmen oder ggf. Abkühlen der Zuluft enthält.

**13.** Belüftungssystem nach einem der vorhergehenden Ansprüche, **dadurch gekennzeichnet, dass** jede aktive Vorrichtung (28) als kegelförmiger Verteiler (38) ausgelegt ist, der eine Ventileinrichtung (40) aufweist, die sich im Auslass der Vorrichtung befindet und mittels einer Antriebsanordnung (42) in Betrieb gesetzt werden kann.

**14.** Belüftungssystem nach Anspruch 13, **dadurch gekennzeichnet, dass** die Antriebsanordnung ein von der Ausströmöffnung (44) der Vorrichtung getrennter Elektromotor (42) ist.

**15.** Belüftungssystem nach Anspruch 14, **dadurch gekennzeichnet, dass** der Elektromotor (42) in der Ventileinrichtung (40) eingeschlossen ist.

**16.** Belüftungssystem nach Anspruch 15, **dadurch gekennzeichnet, dass** die Ventileinrichtung (40) ein Absperrkonus oder ein Ventilteller ist.

**17.** Belüftungssystem nach Anspruch 15 oder 16, **dadurch gekennzeichnet, dass** die Ventileinrichtung (40) durch eine Schraubeinrichtung (46, 48) betätigt wird, die von dem Motor (42) beaufschlagt wird.

**18.** Belüftungssystem nach Anspruch 17, **dadurch gekennzeichnet, dass** die Schraubeinrichtung aus einer Gewindespindel oder - mutter (46) besteht.

**19.** Belüftungssystem nach einem der vorhergehenden Ansprüche, **dadurch gekennzeichnet, dass** der vorbestimmte Öffnungsgrad im Bereich von 70-90% des maximalen Öffnungsgrades liegt.

**20.** Verfahren zum Steuern eines Belüftungssystems nach einem der Ansprüche 1-19, das eine Luftbehandlungseinheit (2) mit einem Zuluftgebläse (4) umfasst, das mit einem Zuluftkanal (8) mit einer Anzahl von Seitenkanälen (12) und einem vor dem ersten Seitenkanal angeordneten ersten Drucksensor (16) verbunden ist, um die Drehzahl des Gebläses nach einem vorbestimmten Dimensionierungsparameter ($P_{tot}$) zu steuern, wobei die Seitenkanäle (12) jeweils mit ihrem eigenen zusätzlichen Drucksensor (16) versehen sind, der mit einem Regler (20) verbunden ist, um den Druck in dem jeweiligen Seitenkanal (12) zwischen einem oberen Grenzwert ($P_{max}$) und einem unteren Grenzwert ($P_{min}$) in Abhängigkeit von der Drehzahl (n) des Gebläses (4) konstant zu halten, wobei der Regler (20) eine Lüftungsklappe (22) mit einer Betätigungsvorrichtung umfasst, **gekennzeichnet durch** die folgenden Schritte:

a) die Betätigungsvorrichtung jeder Seitenkanallüftungsklappe (22; $S_1$, $S_2$, $S_n$) zeigt den Öffnungsgrad ($\alpha_1$, $\alpha_2$, $\alpha_n$) der Lüftungsklappe an und führt den Wert desselben einem System Manager (24; M) zu, der in dem System angeordnet ist und mit Hilfe

b) einer Auswerteschaltung (24; U) die aktuellen Öffnungsgrade der Lüftungsklappen miteinander vergleicht, um festzustellen, welche der Lüftungsklappen (22; $S_1$, $S_2$, $S_n$) den größten aktuellen Öffnungsgrad ($\alpha_{dim}$) hat,

c) wobei die Auswerteschaltung (24; U) dann, wenn alle Lüftungsklappen bis zu einem gewissen Grad geschlossen sind und der größte aktuelle Öffnungsgrad ($\alpha_{dim}$) größer ist als ein vorbestimmter Öffnungsgrad ($\alpha_{pred}$), Signale (26) für das Gebläse (4) erzeugt, um die Drehzahl zu reduzieren, bis die Lüftungsklappe ihren maximalen Öffnungsgrad ($\alpha_{max}$) annimmt.

**Revendications**

**1.** Dispositif pour un système de ventilation de pièce comprenant une unité de traitement (2) de l'air munie d'une soufflante d'air fourni (4) qui est reliée à une conduite d'air fourni (8) ayant un certain nombre de conduites secondaires (12), pourvues d'ouvertures d'air fourni et d'un premier capteur de pression (16) placé avant la première conduite secondaire (12), pour réguler la vitesse (n) de la soufflante (4) en fonction d'un paramètre de dimensionnement prédéterminé ($P_{tot}$), lesquelles conduites secondaires (12) sont toutes munies de leur propre capteur de pression supplémentaire (16) relié à un régulateur (20), pour maintenir la pression constante dans la conduite secondaire respective (12) entre des valeurs limites supérieure ($P_{max}$) et inférieure ($P_{min}$) qui dépendent de la vitesse (n) de la soufflante (4), lequel régulateur (20) comprend un registre (22) ayant un dispositif d'actionnement, **caractérisé en ce que** chaque régulateur (20) est connecté à un gestionnaire de système (24), qui lui-même communique (26) avec une unité de régulation (36) pour réguler l'écoulement dans chaque ouverture d'air fourni au moyen d'un dispositif d'air fourni (28) en fonction de capteurs de pièce (30, 32, 34) reliés à ladite unité de régulation (36), grâce à quoi la vitesse (n) de la soufflante (4), en fonction du degré d'ouverture ($\alpha_1$, $\alpha_2$-$\alpha_n$) des registres (22), peut être commandée entre une vitesse maximale prédéterminée ($n_{max}$) pour un débit d'air maximal ($q_{max}$), quand tous les registres (22) et les dispositifs d'air fourni (28) sont ouverts au maximum ($\alpha_{max}$), et une vitesse minimale ($n_{min}$) pour un débit d'air minimal ($q_{min}$), quand tous les registres (22) et les dispositifs d'air fourni (28) sont fermés au maximum ($\alpha_{min}$), afin de maintenir des pressions de conduites secondaires prédéterminées ($P_1$, $P_2$-$P_n$), et **en ce que** le gestionnaire de système a un circuit d'évaluation (24), pour la comparaison mutuelle du degré d'ouverture actuel ($\alpha_1$, $\alpha_2$-$\alpha_n$) des registres (22), lequel circuit d'évaluation (24) est adapté de façon à, lorsque tous les registres (22) sont fermés jusqu'à un certain degré et que le registre le plus ouvert (22) a atteint un degré d'ouverture prédéterminé ($\alpha_{pred}$), fournir des signaux (26) à la soufflante (4) pour réduire la vitesse (n) jusqu'à ce que ledit registre (22) ait atteint le degré d'ouverture maximal ($\alpha_{max}$).

2. Système de ventilation selon la revendication 1, **caractérisé en ce que** l'unité de traitement d'air (2) comprend une soufflante d'air rejeté (6) qui, de manière correspondante à la soufflante d'air fourni (4), est reliée à une conduite d'air rejeté (10) ayant un certain nombre de conduites secondaires d'air rejeté (14) et un deuxième capteur de pression (18), placé avant la première conduite secondaire, pour réguler la vitesse (n) de la soufflante d'air rejeté (6) en fonction d'un deuxième paramètre de dimensionnement prédéterminé ($P_{2tot}$), et **en ce que** chaque conduite secondaire d'air rejeté (14) comprend un registre (22) d'air rejeté qui est muni d'un dispositif d'actionnement et a un angle d'ouverture ($\alpha_1$, $\alpha_2$-$\alpha_n$), qui peut être régulé au moyen de signaux de commande fournis par le régulateur (20) de la conduite secondaire d'air fourni (12) correspondante, pour établir une pression dans la conduite secondaire d'air rejeté (14) qui est directement proportionnelle à la valeur réelle actuelle de la pression statique qui règne dans la conduite secondaire d'air fourni (12).

3. Système de ventilation selon la revendication 1, **caractérisé en ce que** l'unité de traitement d'air (2) comprend une soufflante d'air rejeté (6) qui, de manière correspondante à la soufflante d'air fourni (4), est reliée à une conduite d'air rejeté (10) ayant un certain nombre de conduites secondaires d'air rejeté (14) et un deuxième capteur de pression (18), placé avant la première conduite secondaire, pour réguler la vitesse (n) de la soufflante d'air rejeté (6) en fonction d'un deuxième paramètre de dimensionnement prédéterminé ($P_{2tot}$), et **en ce que** chaque conduite secondaire d'air rejeté (14) comprend un deuxième capteur de pression (18) supplémentaire qui est situé en un point indiqué de cette dernière et est relié à un deuxième régulateur (20) pour maintenir la pression constante dans la conduite secondaire d'air rejeté (14) respective entre des valeurs limites supérieure ($P_{max}$) et inférieure ($P_{min}$), qui, de manière similaire, dépendent de la vitesse (n) de la soufflante (6), pour la pression régnant dans la conduite secondaire d'air rejeté (14) respective.

4. Système de ventilation selon la revendication 3, **caractérisé en ce que** le deuxième régulateur (20) est adapté pour régler la valeur réelle du débit au point indiqué de la conduite secondaire d'air rejeté (14) selon une valeur voulue pour la conduite secondaire d'air fourni (12).

5. Système de ventilation selon la revendication 4, **caractérisé en ce que** la valeur voulue pour la conduite secondaire d'air rejeté (14) est la même que la valeur indiquée par le premier capteur de pression (16).

6. Système de ventilation selon l'une quelconque des revendications précédentes, **caractérisé en ce que** les conduites secondaires (14) de la conduite d'air rejeté (10) comportent chacune un nombre individuel d'ouvertures d'air rejeté.

7. Système de ventilation selon la revendication 6, **caractérisé en ce que** chaque ouverture d'air rejeté est munie d'un dispositif d'air rejeté (28) pour établir un débit prédéterminé d'air rejeté.

8. Système de ventilation selon la revendication 7, **caractérisé en ce que** le dispositif d'air rejeté est un dispositif actif (28).

9. Système de ventilation selon l'une quelconque des revendications précédentes, **caractérisé en ce que** les capteurs placés dans chaque pièce comprennent des capteurs de température (30).

10. Système de ventilation selon la revendication 9, **caractérisé en ce que** les capteurs placés dans chaque pièce comprennent des capteurs (34) qui indiquent une valeur de concentration en $CO_2$.

**11.** Système de ventilation selon la revendication 9 ou 10, **caractérisé en ce que** les capteurs placés dans chaque pièce comprennent des détecteurs de présence (32) qui comportent un indicateur IR.

**12.** Système de ventilation selon l'une quelconque des revendications précédentes, **caractérisé en ce que** l'unité de traitement d'air (2) comporte un échangeur de chaleur pour chauffer ou bien, selon le cas, refroidir l'air fourni.

**13.** Système de ventilation selon l'une quelconque des revendications précédentes, **caractérisé en ce que** chaque dispositif actif (28) se présente sous la forme d'un distributeur conique (38) qui comporte un moyen formant vanne (40) qui est situé dans la sortie du dispositif et est actionnable au moyen d'un système d'entraînement (42).

**14.** Système de ventilation selon la revendication 13, **caractérisé en ce que** le système d'entraînement est un moteur électrique (42) séparé de l'ouverture d'écoulement (44) du dispositif.

**15.** Système de ventilation selon la revendication 14, **caractérisé en ce que** le moteur électrique (42) est enfermé dans le moyen formant vanne (40).

**16.** Système de ventilation selon la revendication 15, **caractérisé en ce que** le moyen formant vanne (40) est un cône d'arrêt ou un disque de clapet.

**17.** Système de ventilation selon la revendication 15 ou 16, **caractérisé en ce que** le moyen formant vanne (40) est actionné par un moyen à vis (46, 48) entraîné par le moteur (42).

**18.** Système de ventilation selon la revendication 17, **caractérisé en ce que** le moyen à vis consiste en une tige filetée (46) ou un écrou.

**19.** Système de ventilation selon l'une quelconque des revendications précédentes, **caractérisé en ce que** le degré d'ouverture prédéterminé est compris dans un intervalle de 70 à 90 % du degré d'ouverture maximal.

**20.** Procédé pour commander un système de ventilation conforme à l'une quelconque des revendications 1 à 20 et comprenant une unité de traitement (2) de l'air munie d'une soufflante d'air fourni (4) qui est reliée à une conduite d'air fourni (8) ayant un certain nombre de conduites secondaires (12) et d'un premier capteur de pression (16), placé avant la première conduite secondaire, pour réguler la vitesse de la soufflante en fonction d'un paramètre de dimensionnement prédéterminé ($P_{tot}$), lesquelles conduites secondaires (12) sont toutes munies de leur propre capteur de pression supplémentaire (16) relié à un régulateur (20) pour maintenir la pression constante dans la conduite secondaire respective (12) entre des valeurs limites supérieure ($P_{max}$) et inférieure ($P_{min}$) qui dépendent de la vitesse (n) de la soufflante (4), lequel régulateur (20) comprend un registre (22) ayant un dispositif d'actionnement, **caractérisé par** les étapes suivantes :

a) le dispositif d'actionnement de chaque registre de conduite secondaire (22 ; $S_1$, $S_2$, $S_n$) indique le degré d'ouverture ($\alpha_1$, $\alpha_2$, $\alpha_n$) du registre et fournit la valeur de celui-ci à un gestionnaire de système (24 ; M) qui est agencé dans le système, et au moyen d'un
b) circuit d'évaluation (24 ; U), compare les degrés d'ouverture actuels des registres entre eux afin d'établir lequel des registres (22 ; $S_1$, $S_2$, $S_n$) a le plus grand degré d'ouverture actuel ($\alpha_{dim}$),
c) lequel circuit d'évaluation (24 ; U), quand tous les registres sont fermés jusqu'à un certain degré et que le plus grand degré d'ouverture actuel ($\alpha_{dim}$) est supérieur à un degré d'ouverture prédéterminé ($\alpha_{pred}$), envoie des signaux (26) à la soufflante (4) afin de réduire la vitesse jusqu'à ce que le registre atteigne son degré d'ouverture maximal ($\alpha_{max}$).

FIG.1

FIG. 2

FIG.3

FIG.4

FIG. 5

FIG. 6